# EUROPÄISCHE PATENTSCHRIFT

(11) **EP 3 067 650 B1**
(45) Veröffentlichungstag und Bekanntmachung des Hinweises auf die Patenterteilung: **25.04.2018**
(21) Anmeldenummer: 16000459.4
(22) Anmeldetag: 25.02.2016
(51) Int. Cl.: F25J 3/04

(54) **ANLAGE UND VERFAHREN ZUR ERZEUGUNG VON SAUERSTOFF DURCH TIEFTEMPERATURZERLEGUNG VON LUFT**
INSTALLATION AND METHOD FOR PRODUCING GASEOUS OXYGEN BY CRYOGENIC AIR DECOMPOSITION
INSTALLATION ET PROCEDE DE PRODUCTION D'OXYGENE PAR SEPARATION CRYOGENIQUE DE L'AIR

(30) Priorität: 13.03.2015 EP 15000748
(43) Veröffentlichungstag der Anmeldung: 14.09.2016
(73) Patentinhaber: Linde Aktiengesellschaft, 80331 München (DE)
(72) Erfinder: Lochner, Stefan, 85567 Grafing (DE); Lautenschlager, Tobias, 82194 Gröbenzell (DE)
(74) Vertreter: Imhof, Dietmar

(56) Entgegenhaltungen:
- WO-A1-2014/169989
- WO-A2-2014/135271
- DE-A1- 10 251 485
- DE-A1-102009 023 900
- FR-A3- 2 964 451
- "Dual LP Column with Argon", IP.COM JOURNAL, IP.COM INC., WEST HENRIETTA, NY, US, 24. November 2008 (2008-11-24), XP013127145, ISSN: 1533-0001

## Beschreibung

Die Erfindung betrifft eine Anlage zur Erzeugung von Sauerstoff durch Tieftemperaturzerlegung von Luft gemäß dem Oberbegriff des Patentanspruchs 1.

Die Grundlagen der Tieftemperaturzerlegung von Luft im Allgemeinen sowie der Aufbau von Zwei-Säulen-Anlagen im Speziellen sind in der Monografie "Tieftemperaturtechnik" von Hausen/Linde (2. Auflage, 1985) und in einem Aufsatz von Latimer in Chemical Engineering Progress (Vol. 63, No.2, 1967, Seite 35) beschrieben. Die Wärmeaustauschbeziehung zwischen Hochdrucksäule und Niederdrucksäule einer Doppelsäule wird im Regelfall durch einen Hauptkondensator realisiert, in dem Kopfgas der Hochdrucksäule gegen verdampfende Sumpfflüssigkeit der Niederdrucksäule verflüssigt wird.

Das Destillationssäulen-System der Erfindung kann grundsätzlich als klassisches Zwei-Säulen-System mit Hochdrucksäule und Niederdrucksäule ausgebildet sein. Es kann zusätzlich zu den beiden Trennsäulen zur Stickstoff-Sauerstoff-Trennung weitere Vorrichtungen zur Gewinnung anderer Luftkomponenten, insbesondere von Edelgasen aufweisen, beispielsweise eine Krypton-Xenon-Gewinnung.

Der Hauptkondensator ist bei der Erfindung als Kondensator-Verdampfer ausgebildet. Als "Kondensator-Verdampfer" wird ein Wärmetauscher bezeichnet, in dem ein erster, kondensierender Fluidstrom in indirekten Wärmeaustausch mit einem zweiten, verdampfenden Fluidstrom tritt. Jeder Kondensator-Verdampfer weist einen Verflüssigungsraum und einen Verdampfungsraum auf, die aus Verflüssigungspassagen beziehungsweise Verdampfungspassagen bestehen. In dem Verflüssigungsraum wird die Kondensation (Verflüssigung) des ersten Fluidstroms durchgeführt, in dem Verdampfungsraum die Verdampfung des zweiten Fluidstroms. Verdampfungs- und Verflüssigungsraum werden durch Gruppen von Passagen gebildet, die untereinander in Wärmeaustauschbeziehung stehen.

Dabei kann der Hauptkondensator als ein- oder mehrstöckiger Badverdampfer, insbesondere als Kaskadenverdampfer (beispielsweise wie in EP 1287302 B1 = US 6748763 B2 beschrieben), oder aber als Fallfilmverdampfer ausgebildet sein. Er kann durch einen einzigen Wärmetauscherblock gebildet werden oder auch durch mehrere Wärmetauscherblöcke, die in einem gemeinsamen Druckbehälter angeordnet sind.
Ein "Hauptwärmetauscher" dient zur Abkühlung von Einsatzluft in indirektem Wärmeaustausch mit Rückströmen aus dem Destillationssäulen-System. Er kann aus einem einzelnen oder mehreren parallel und/oder seriell verbundenen Wärmetauscherabschnitten gebildet sein, zum Beispiel aus einem oder mehreren Plattenwärmetauscher-Blöcken. Separate Wärmetauscher, die speziell der Verdampfung oder Pseudo-Verdampfung eines einzigen flüssigen oder überkritischen Fluids dienen, ohne Anwärmung und/oder Verdampfung eines weiteren Fluids, gehören nicht zum Hauptwärmetauscher.
Die relativen räumlichen Begriffe "oben", "unten", "über", "unter", "oberhalb", "unterhalb", "neben", "nebeneinander", "vertikal", "horizontal" etc. beziehen sich hier auf die räumliche Ausrichtung der Trennsäulen im Normalbetrieb. Unter einer Anordnung zweier Säulen oder Apparateteile "übereinander" wird hier verstanden, dass das sich obere Ende des unteren der beiden Apparateteile sich auf niedrigerer oder gleicher geodätischer Höhe befindet wie das untere Ende der oberen der beiden Apparateteile und sich die Projektionen der beiden Apparateteile in eine horizontale Ebene überschneiden. Insbesondere sind die beiden Apparateteile genau übereinander angeordnet, das heißt die Achsen der beiden Säulen verlaufen auf derselben vertikalen Geraden.
Eine Anlage der eingangs genannten Art und ein entsprechendes Verfahren sind aus der Zeichnung 3 der Veröffentlichung IPCOM00176762D ("Dual LP column with Argon") bekannt.
Der Erfindung liegt die Aufgabe zugrunde, eine derartige Anlage mit einer besonders hohen Kapazität für die Sauerstoffproduktion auszustatten und gleichzeitig so kompakt auszubilden, dass sie so weit wie möglich vorgefertigt und anschließend zur Baustelle transportiert werden kann. Für solche Transporte gibt es strenge Limitierungen hinsichtlich der Höhe (Transportlänge) und des Durchmessers (Transportbreite) der Trennsäulen. Zum Beispiel werden häufig Säulendurchmesser von maximal 4,8 m vorgegeben.

Diese Aufgabe wird durch die Merkmale des Patentanspruchs 1 gelöst. Insbesondere werden eine Argonausschleussäule und eine Hilfssäule eingesetzt und die Säulen werden in besonders vorteilhafter Weise aufgestellt.

Unter einer "Argonausschleussäule " wird hier eine Trennsäule zur Argon-Sauerstoff-Trennung bezeichnet, die nicht zur Gewinnung eines reinen Argonprodukts, sondern zur Ausschleusung von Argon der in Hochdrucksäule und Niederdrucksäule zu zerlegenden Luft dient. Ihre Schaltung unterscheidet sich nur wenig von der einer klassischen Rohargonsäule, allerdings enthält sie deutlich weniger theoretische Böden, nämlich weniger als 40, insbesondere zwischen 15 und 30. Wie eine Rohargonsäule ist der Sumpfbereich einer Argonausschleussäule mit einer Zwischenstelle der Niederdrucksäule verbunden und die Argonausschleussäule wird durch einen Kopfkondensator gekühlt, auf dessen Verdampfungsseite entspannte Sumpfflüssigkeit aus der Hochdrucksäule eingeleitet wird; eine Argonausschleussäule weist keinen Sumpfverdampfer auf.

In der Hilfssäule wird ein Teil der Einsatzluft behandelt, insbesondere mindestens ein Teil eines turbinenentspannten Luftstroms, der weder in die Hochdrucksäule noch in die Niederdrucksäule geleitet wird.

Zunächst erscheint es angesichts des Bestrebens, eine besonders kompakte Anlage zu realisieren, widersinnig zwei zusätzliche Säulen zu den üblichen, nämlich Hochdrucksäule und Niederdrucksäule einzusetzen. Im Rahmen der Erfindung hat sich jedoch überraschenderweise herausgestellt, dass sich insgesamt sowohl eine besonders hohe Kapazität als auch eine gute Baubarkeit ergibt. Die erfindungsgemäße Kombination von Hilfssäule, Argonausschleussäule und Säulenanordnung führt zu einer besonders vorteilhaften Anlage.

Am Kopf der Hilfssäule wird vorzugsweise ein erstes gasförmiges Stickstoffprodukt gewonnen, am Kopf der Niederdrucksäule ein zweites gasförmiges Stickstoffprodukt. Diese beiden Stickstoffprodukte können zum Beispiel zusammengeführt und gemeinsam in einem Unterkühlungs-Gegenströmer und einem Hauptwärmetauscher auf etwa Umgebungstemperatur angewärmt werden.

In vielen Fällen ist es günstiger, die erste und die zweite Kopffraktion separat - also in getrennten Passagengruppen - durch den Hauptwärmetauscher zu leiten und diese Fraktionen dabei gegen Einsatzluft für die Hochdrucksäule anzuwärmen. Dann kann zum Beispiel der Kopf der Niederdrucksäule unter besonders niedrigem Druck von beispielsweise 1,0 bis 1,6 bar betrieben werden, wobei am Kopf der Hilfssäule ein um etwa 0,1 bis 0,3 bar höherer Druck von 1,1 bis 1,7 bar herrscht, der ausreicht, um das Kopfgas der ersten gasförmigen Kopffraktion aus der Hilfssäule als Regeneriergas für eine Molekularsiebstation zur Luftreinigung zu nutzen. Durch den besonders niedrigen Niederdrucksäulendruck wird der Energieverbrauch der Anlage verringert.
In einer weiteren Ausgestaltung der Erfindung wird Gas aus dem Verdampfungsraum des Argonausschleussäulen-Kopfkondensators in die Hilfssäule eingeleitet. Dieses Gas kann vorher mit der gasförmigen Fraktion, deren Sauerstoffgehalt gleich demjenigen der Luft oder höher ist, vermischt und gemeinsam mit diesem der am Sumpf Hilfssäule zugeleitet werden. Alternativ wird nur das Gas aus dem Argonausschleussäulen-Kopfkondensator am Sumpf der Hilfssäule eingeleitet und die andere gasförmige Fraktion an einer Zwischenstelle oberhalb eines Stoffaustauschabschnitts. Hierdurch kann die Niederdrucksäule stärker entlastet und damit die Kapzität der Gesamtanlage erhöht werden.
Es ist ferner günstig, wenn die Mittel zum Einleiten einer gasförmigen Fraktion, deren Sauerstoffgehalt gleich demjenigen der Luft oder höher ist, in die Hilfssäule als Mittel zum Einleiten turbinenentspannter Luft in die Hilfssäule ausgebildet sind. Hierdurch muss die Turbinenluft nicht oder nur teilweise in die Niederdrucksäule eingeleitet werden.
Die Erfindung betrifft außerdem ein Verfahren zur Erzeugung von Sauerstoff durch Tieftemperaturzerlegung von Luft gemäß den Patentansprüchen 7 bis 13.
Die Erfindung sowie weitere Einzelheiten der Erfindung werden im Folgenden anhand von in den Zeichnungen schematisch dargestellten Ausführungsbeispielen näher erläutert. Hierbei zeigen:
- Figur 1: ein erstes Ausführungsbeispiel der Erfindung mit Zusammenführung der beiden Kopffraktionen von Hilfssäule und Niederdrucksäule,
- Figur 2: ein zweites Ausführungsbeispiel mit separater Führung der beiden Kopfffraktionen,
- Figur 3: ein drittes Ausführungsbeispiel mit der Einleitung von Gas aus dem Argonausschleussäulen-Kopfkondensator in die Hilfssäule und
- Figur 4: eine Abwandlung von Figur 3 mit einem zusätzlichen Stoffaustauschabschnitt in der Hilfssäule.

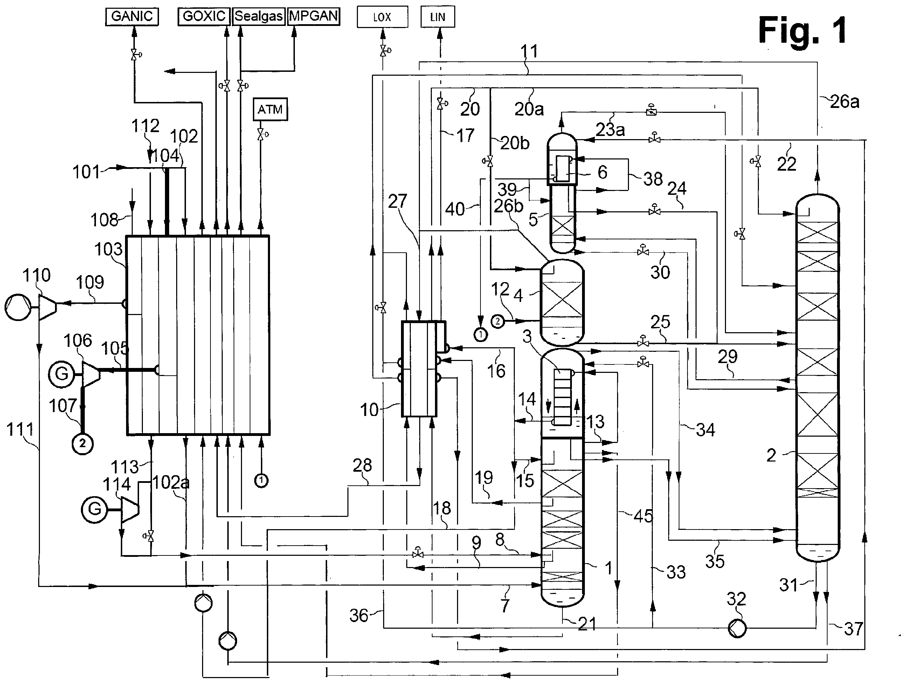

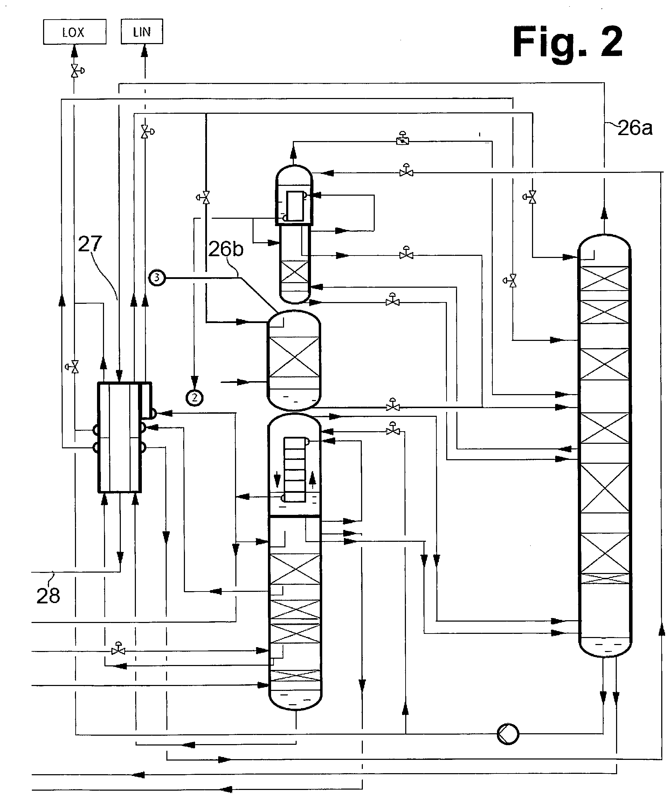

Der Hauptwärmetauscher 103 mit Zubehör wie den Entspannungsturbinen 106, 110, 114 ist lediglich in Figur 1 dargestellt. In den Ausführungsbeispielen der Figuren 2 bis 4 sieht er genauso aus, auch wenn er in den Zeichnungen nicht dargestellt ist.

Das Destillationssäulen-System der Anlage in **Figur 1** weist eine Hochdrucksäule 1, eine Niederdrucksäule 2, einen Hauptkondensator 3, eine Hilfssäule 4, eine Argonausschleussäule 5 und einen Argonausschleussäulen-Kopfkondensator 6 auf. In dem Ausführungsbeispiel sind der Hauptkondensator 3 als sechsstöckiger Kaskadenverdampfer und der Argonausschleussäulen-Kopfkondensator 6 als einstöckiger Badverdampfer ausgebildet. Die Hilfssäule enthält in dem Beispiel 20 praktische oder theoretische Böden. Falls geordnete Packung eingesetzt wird, ist es vorteilhaft eine besondere hohe spezifische Oberfläche zu wählen, beispielsweise 1200 m²/m³.

Verdichtete und gereinigte Einsatzluft wird unter drei verschiedenen Drücken bereitgestellt. Ein erster Druck herrscht in Leitung 101. Ein erster Teil 102 der Luft unter dem ersten Druck wird im Hauptwärmetauscher 103 bis zum kalten Ende abgekühlt und bildet den Luftstrom 102a. Ein zweiter Teil 104 Luft unter dem ersten Druck wird im Hauptwärmetauscher 103 auf eine Zwischentemperatur abgekühlt. Die Luft unter Zwischentemperatur 105 wird einer ersten Enspannungsturbine 106 zugeführt und dort arbeitsleistend entspannt. Die turbinenentspannte Luft 107 bildet einen "dritten Einsatzluftstrom" und wird über Leitung 12 der Hilfssäule 4 zugeleitet.

Die Luft 108 steht unter einem zweiten, höheren Druck, wird im Hauptwärmetauscher 103 auf eine Zwischentemperatur abgekühlt, über Leitung 109 einer zweiten Entspannungsturbine 110 zugeleitet und arbeitsleistend entspannt, um den Luftstrom 111 zu bilden.

Unter einem noch höheren dritten Druck wird ein weiterer Luftstrom, der so genannte Drosselstrom 112 im Hauptwärmetauscher abgekühlt und verflüssigt - oder pseudoverflüssigt, falls der Druck überkritisch ist. Der flüssige oder überkritische Drosselstrom 113 wird hier - entgegen seinem Namen - nicht drosselentswpantt, sondern einer Flüssigturbine (dense fluid turbine) 114 arbeitsleistend entspannt. Die resultierende flüssige Luft 8 billdet einen "zweiten Einsatzluftstrom".
Ein erster Einsatzluftstrom 7 wird aus den Luftströmen 102a und 111 gebildet und gasförmig in die Hochdrucksäule 1 eingeleitet, und zwar unmittelbar oberhalb des Sumpfs. Der zweite Einsatzluftstrom 8 wird in hauptsächlich flüssigem Zustand etwas höher in die Hochdrucksäule 1 eingespeist. Ein Teil 9 davon wird gleich wieder entnommen, in einem Unterkühlungs-Gegenströmer 10 abgekühlt und über Leitung 11 in die Niederdrucksäule 2 eingeleitet. Der dritte Einsatzluftstrom 107 aus der Entspannungsturbine 106 wird über Leitung 12 gasförmig in die Hilfssäule 4 am Sumpf eingespeist.

Abweichend von dem Ausführungsbeispiel könnte der Flüssigluftstrom 11, ein Teil davon oder ein anderer Flüssigluftstrom der Hilfssäule 4 zugeleitet werden, insbesondere an einer Zwischenstelle. Die Hilfssäule würde dann nicht nur einen Stoffaustauschabschnitt wie in dem Ausführungsbeispiel aufweisen, sondern zwei Stoffaustauschabschnitte, zwischen denen die Flüssigluft eingespeist wird.

Ein Teil 13 des Kopfstickstoffs der Hochdrucksäule 1 wird im Hauptkondensator 3 kondensiert. Der dabei erzeugte Flüssigstickstoff 14 wird zu einem ersten Teil 15 in die Hochdrucksäule 1 zurückgespeist und dient dort als Rücklauf. Ein zweiter Teil 16/17 wird im Unterkühlungs-Gegenströmer 10 abgekühlt und als Flüssigstickstoffprodukt (LIN) gewonnen. Der dritte Teil 18 des Flüssigstickstoffs 14 aus dem Hauptkondensator 3 wird einer Innenverdichtung zugeführt und schließlich als gasförmiges Druckprodukt (GANIC) gewonnen. Flüssiger unreiner Stickstoff 19 von einer Zwischenstelle der Hochdrucksäule 1 wird im Unterkühlungs-Gegenströmer 10 unterkühlt. Der unterkühlte Unreinstickstoff 20 wird zu einem ersten Teil 20a auf den Kopf der Niederdrucksäule 2 aufgegeben. Der Rest strömt über Leitung 20b zum Kopf der Hilfssäule.

Flüssiger Rohsauerstoff 21 vom Sumpf der Hochdrucksäule wird ebenfalls zum Unterkühlungs-Gegenströmer 10 geführt und anschließend über Leitung 22 in den Verdampfungsraum des Argonausschleussäulen-Kopfkondensators 6 geleitet. Das in dem Verdampfungsraum gebildete Gas 23a wird der Niederdrucksäule 2 an einer Zwischenstelle zugeführt, ebenso wie der flüssig verbliebene Anteil 24 und die Sumpfflüssigkeit 25 der Hilfssäule 4.

Das Kopfprodukt der Hilfssäule 4 wird als erste gasförmige Kopffraktion 26b über die Leitungen 27 und 28 durch den Unterkühlungs-Gegenströmer 10 und weiter zum Hauptwärmetauscher 103 geführt und schließlich als erstes gasförmiges Stickstoffprodukt gewonnen oder der nicht dargestellten Luftreinigung als Regeneriergas zugeführt. Das Kopfprodukt der Niederdrucksäule 2 wird als zweite gasförmige Kopffraktion 26a abgezogen, mit der ersten gasförmigen Kopffraktion 26b zusammengeführt, über die Leitungen 27 und 28 durch den Unterkühlungs-Gegenströmer 10 und weiter zum Hauptwärmetauscher 103 geleitet und schließlich als zweites gasförmiges Stickstoffprodukt (gemeinsam mit dem ersten) gewonnen. Kopfstickstoff 45 der Hochdrucksäule 1 wird im Hauptwärmetauscher 103 angewärmt und als Mitteldruck-Stickstoffprodukt (MPGAN) gewonnen; ein Teil kann als Dichtgas (SEALGAS) verwendet werden.

Von einer Zwischenstelle der Niederdrucksäule 2 wird ein argonreicher Strom 29 abgezogen und der Argonausschleussäule 5 zugeleitet. In Gegenrichtung strömt Flüssigkeit 30 vom Sumpf der Argonausschleussäule 5 zurück in die Niederdrucksäule.

Kopfgas 38 der Argonausschleussäule wird in den Verflüssigungsraum des Argonausschleussäulen-Kopfkondensators 6 eingeleitet. Dort erzeugte Flüssigkeit 39 wird als Rücklauf auf die Argonausschleussäule 5 aufgegeben. Verbliebenes Gas 40, das einen hohen Argongehalt aufweist, wird in einer eigenen Passagengruppe im Hauptwärmetauscher 103 angewärmt.

Ein erster Teil 33 des flüssigen Sauerstoffs im Sumpf der Niederdrucksäule 2 wird über Leitung 31 und Pumpe 32 in den Verdampfungsraum des Hauptkondensators 3 geleitet. Dort erzeugtes Gas 34 und verbliebene Flüssigkeit 35 werden in die Niederdrucksäule 2 zurückgespeist. Falls Bedarf für ein flüssiges Sauerstoffprodukt (LOX) besteht, kann hierfür ein zweiter Teil 36 des flüssigen Sauerstoffs im Sumpf der Niederdrucksäule 2 verwendet werden, gegebenenfalls nach Abkühlung im Unterkühlungs-Gegenströmer 10. Ein dritter Teil 37 wird einer Innenverdichtung zugeführt und bildet dann das Hauptprodukt der Anlage, nämlich ein gasförmiges Drucksauerstoffprodukt (GOXIC).
Die Säulen und Kondensatoren sind folgendermaßen angeordnet:
- Die Niederdrucksäule 2 steht neben der Hochdrucksäule 1.
- Der Hauptkondensator 3 sitzt über der Hochdrucksäule 1.
- Die Hilfssäule 4 ist über dem Hauptkondensator 3 angeordnet.
- Die Argonausschleussäule 5 sitzt über der Hilfssäule 4.
- Der Argonausschleussäulen-Kopfkondensator 6 ist über der Argonausschleussäule 5 montiert. In einer nicht erfindungsgemäßen Alternative können Hilfssäule 4 und Argonausschleussäule 5 folgendermaßen angeordnet werden:
   - Die Hilfssäule 4 ist über der Niederdrucksäule 2 angeordnet.
   - Die Argonausschleussäule 5 sitzt über dem Hauptkondensator 3.
   - Der Argonausschleussäulen-Kopfkondensator 6 ist über der Argonausschleussäule 5 montiert.

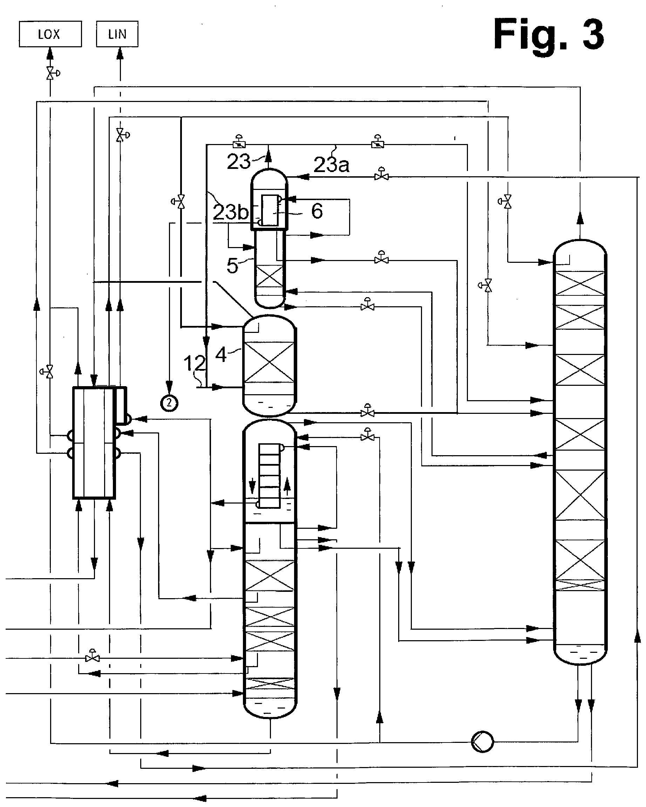

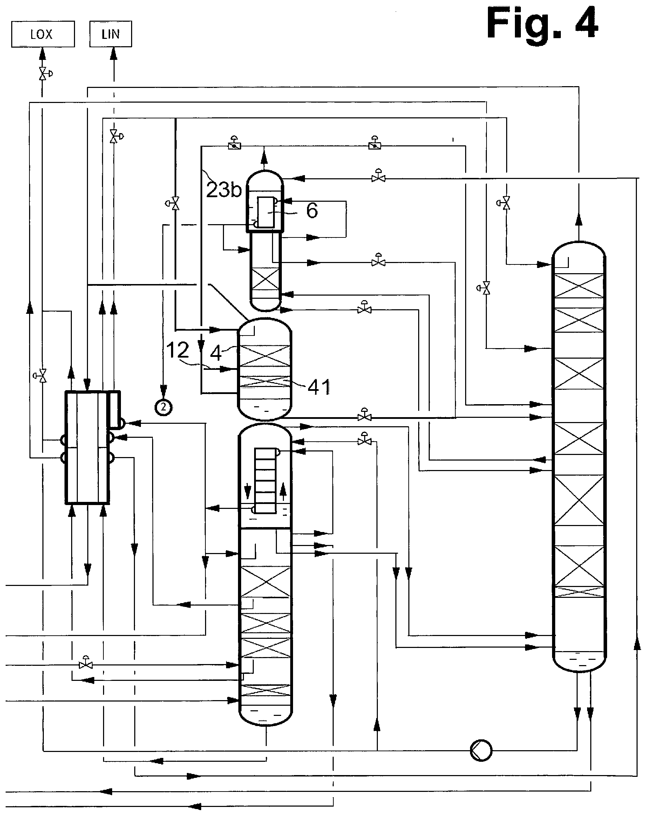

**Figur 2** unterscheidet sich von Figur 1 ausschließlich dadurch, dass nur die zweite gasförmige Kopffraktion (26a) aus der Niederdrucksäule 2 durch die Leitungen 27, 28 und den Unterkühlungs-Gegenströmer 10 geführt wird. Die erste gasförmige Kopffraktion 26b wird dagegen an dem Unterkühlungs-Gegenströmer vorbei geführt und strömt durch separate Passagen im Hauptwärmetauscher. Dieses Merkmal kann auch bei den Anlagen der folgenden Figuren 3 und 4 realisiert werden.
In **Figur 3** wird nur ein Teil 23a des Gases 23 aus dem Verdampfungsraum des Argonausschleussäule-Kopfkondensators in die Niederdrucksäule 2 geleitet. Der Rest 23b strömt in in die Hilfssäule 4, und zwar gemeinsam mit der turbinenentspannten Luft.
In **Figur 4** besitzt die Hilfssäule 4 einen zusätzlichen Stoffaustauschabschnitt 41, wobei das Gas 23b aus dem Argonausschleussäulen-Kopfkondensator 6 unterhalb dieses Stoffaustauschabschnittes eingeleitet wird und die turbinenentspannte Luft 12 oberhalb.

## Patentansprüche

1. Anlage zur Erzeugung von Sauerstoff durch Tieftemperaturzerlegung von Luft mit
- einer Hochdrucksäule (1) und einer Niederdrucksäule (2),
- einem Hauptkondensator (3), der als Kondensator-Verdampfer ausgebildet ist, wobei der Verflüssigungsraum des Hauptkondensators (3) mit dem Kopf der Hochdrucksäule (2) in Strömungsverbindung (13, 14, 15) steht und der Verdampfungsraum des Hauptkondensators (3) mit der Niederdrucksäule (2) in Strömungsverbindung (31, 33, 34, 35) steht,
- einer Sauerstoffproduktleitung (37), die mit der Niederdrucksäule (2) verbunden ist,
- einer Hilfssäule (4),
- Mitteln zum Einleiten einer gasförmigen Fraktion (12), deren Sauerstoffgehalt gleich demjenigen der Luft oder höher ist, in den Sumpfbereich die Hilfssäule (4) und mit
- einer Rücklaufflüssigkeitsleitung (19, 20, 20b) zum Einleiten eines Flüssigstroms aus der Hochdrucksäule (1), dem Hauptkondensator (3) oder der Niederdrucksäule (2) als Rücklauf auf den Kopf der Hilfssäule (4), wobei der Flüssigstrom einen Stickstoffgehalt aufweist, der mindestens gleich demjenigen der Luft ist,
- eine Argonausschleussäule (5), die in Strömungsverbindung (29, 30) mit einer Zwischenstelle der Niederdrucksäule (2) steht,
- einen Argonausschleussäulen-Kopfkondensator (6), der als Kondensator-Verdampfer ausgebildet ist, wobei der Verflüssigungsraum des Argonausschleussäulen-Kopfkondensators (6) mit dem Kopf der Argonausschleussäule (5) in Strömungsverbindung (38, 39) steht,
- eine Rohsauerstoffleitung (21, 22) zum Einleiten von flüssigem Rohsauerstoff aus dem Sumpf der Hochdrucksäule (1) in den Verdampfungsraum des Argonausschleussäulen-Kopfkondensators (6), wobei
- der Hauptkondensator (3) über der Hochdrucksäule (1) und
- der Argonausschleussäulen-Kopfkondensator (6) über der Argonausschleussäule (5) angeordnet ist, **dadurch gekennzeichnet, dass**
- die Niederdrucksäule (2) neben der Hochdrucksäule (1),
- die Hilfssäule (4) über dem Hauptkondensator (3) und
- die Argonausschleussäule (5) über der Hilfssäule (4) angeordnet sind.

2. Anlage nach Anspruch 1, **gekennzeichnet durch** Mittel zum Gewinnen einer ersten gasförmigen Kopffraktion (26b) aus der Hilfssäule (4) als erstes gasförmiges Stickstoffprodukt.

3. Anlage nach Anspruch 1 oder 2, **gekennzeichnet durch** Mittel zum Gewinnen einer zweiten gasförmigen Kopffraktion (26a) aus der Niederdrucksäule (2) als zweites gasförmiges Stickstoffprodukt.

4. Anlage nach den Ansprüchen 2 und 3, **gekennzeichnet durch** Mittel (26b; 27, 28) zum separaten Durchleiten der ersten und der zweiten Kopffraktion durch einen Hauptwärmetauscher (103) zum Anwärmen dieser Fraktionen gegen Einsatzluft (102, 108, 112) für die Hochdrucksäule (1).

5. Anlage nach einem der Ansprüche 1 bis 4, **gekennzeichnet durch** Mittel zum Einleiten von Gas (23b) aus dem Verdampfungsraum des Argonausschleussäulen-Kopfkondensators (6) in die Hilfssäule (4).

6. Anlage nach einem der Ansprüche 1 bis 5, **dadurch gekennzeichnet, dass** die Mittel zum Einleiten einer gasförmigen Fraktion, deren Sauerstoffgehalt gleich demjenigen der Luft oder höher ist, in die Hilfssäule als Mittel zum Einleiten turbinenentspannter Luft (12) in die Hilfssäule (4) ausgebildet sind.

7. Verfahren zur Erzeugung von Sauerstoff durch Tieftemperaturzerlegung von Luft in einem Destillationssäulen-System das
- eine Hochdrucksäule (1) und eine Niederdrucksäule (2),
- einen Hauptkondensator (3), der als Kondensator-Verdampfer ausgebildet ist, wobei der Verflüssigungsraum des Hauptkondensators (3) mit dem Kopf der Hochdrucksäule (2) in Strömungsverbindung (13, 14, 15) steht und der Verdampfungsraum des Hauptkondensators (3) mit der Niederdrucksäule (2) in Strömungsverbindung (31, 33, 34, 35) steht, und
- eine Hilfssäule (4)
aufweist, wobei
- ein Sauerstoffstrom (37) aus der Niederdrucksäule (2) abgezogen und als Sauerstoffprodukt gewonnen wird.
- eine gasförmige Fraktion (12), deren Sauerstoffgehalt gleich demjenigen der Luft oder höher ist, in den Sumpfbereich der Hilfssäule (4) eingeleitet wird,
- ein Flüssigstrom (19, 20, 20b) aus der Hochdrucksäule (1), dem Hauptkondensator (3) oder der Niederdrucksäule (2) als Rücklauf auf den Kopf der Hilfssäule (4) aufgegeben wird, wobei der Flüssigstrom einen Stickstoffgehalt aufweist, der mindestens gleich demjenigen der Luft ist,
- ein argonreicher Strom (29) von einer Zwischenstelle der Niederdrucksäule (2) in eine Argonausschleussäule (5) eingeleitet wird,
- Rücklauf (39) für die Argonausschleussäule (5) in einem Argonausschleussäulen-Kopfkondensator (6) erzeugt wird, der als Kondensator-Verdampfer ausgebildet ist, wobei der Verflüssigungsraum des Kopfkondensators (6) der Argonausschleussäule mit dem Kopf der Argonausschleussäule (5) in Strömungsverbindung (38) steht,
- Rohsauerstoff (21, 22) aus dem Sumpf der Hochdrucksäule (1) in den Verdampfungsraum des Argonausschleussäulen-Kopfkondensators (6) eingeleitet wird, wobei
- der Hauptkondensator (3) über der Hochdrucksäule (1) angeordnet ist und
- der Argonausschleussäulen-Kopfkondensator (6) über der Argonausschleussäule (5) angeordnet ist,
**dadurch gekennzeichnet, dass**
- die Niederdrucksäule (2) neben der Hochdrucksäule (1),
- die Hilfssäule (4) über dem Hauptkondensator (3) und
- die Argonausschleussäule (5) über der Hilfssäule (4) angeordnet sind.

8. Verfahren nach Anspruch 7, bei dem eine erste gasförmige Kopffraktion (26b) aus der Hilfssäule (4) als erstes gasförmiges Stickstoffprodukt gewonnen wird.

9. Verfahren nach Anspruch 7 oder 8, bei dem eine zweite gasförmigen Kopffraktion (26a) aus der Niederdrucksäule (2) als zweites gasförmiges Stickstoffprodukt gewonnen wird.

10. Verfahren nach Anspruch 8 und 9, bei dem die erste und die zweite Kopffraktion (26b; 27, 28) separat durch einen Hauptwärmetauscher (103) zum Anwärmen dieser Fraktionen gegen Einsatzluft (102, 108, 112) für die Hochdrucksäule (1) geleitet werden.

11. Verfahren nach einem der Ansprüche 7 bis 10, bei dem Gas (23b) aus dem Verdampfungsraum des Argonausschleussäulen-Kopfkondensators (6) in die Hilfssäule (4) eingeleitet wird.

12. Verfahren nach einem der Ansprüche 1 bis 5, **dadurch gekennzeichnet, dass** die gasförmige Fraktion, deren Sauerstoffgehalt gleich demjenigen der Luft oder höher ist, durch turbinenentspannte Luft (12) gebildet wird.

## Claims

1. System for generation of oxygen by low-temperature air separation having
- a high-pressure column (1) and a low-pressure column (2),
- a main condenser (3) which is constructed as a condenser-evaporator, wherein the liquefaction space of the main condenser (3) is flow-connected (13, 14, 15) to the top of the high-pressure column (2) and the evaporation space of the main condenser (3) is flow-connected (31, 33, 34, 35) to the low-pressure column (2),
- an oxygen product line (37) that is connected to the low-pressure column (2),
- an auxiliary column (4),
- means for introducing a gaseous fraction (12), the oxygen content of which is equal to that of air or higher, into the sump region of the auxiliary column (4) and having
- a reflux liquid line (19, 20, 20b) for introducing a liquid stream from the high-pressure column (1), the main condenser (3), or the low-pressure column (2) as reflux to the top of the auxiliary column (4), wherein the liquid stream has a nitrogen content that is at least equal to that of air,
- an argon removal column (5) that is flow-connected (29, 30) to an intermediate site of the low-pressure column (2),
- an argon removal column top condenser (6) that is constructed as a condenser-evaporator, wherein the liquefaction space of the argon removal column top condenser (6) is flow-connected (38, 39) to the top of the argon removal column (5),
- a crude oxygen line (21, 22) for introducing liquid crude oxygen from the sump of the high-pressure column (1) into the evaporation space of the argon removal column top condenser (6), wherein
- the main condenser (3) is arranged over the high-pressure column (1) and
- the argon removal column top condenser (6) is arranged over the argon removal column (5),
**characterized in that**
- the low-pressure column (2) is arranged beside the high-pressure column (1),
- the auxiliary column (4) is arranged over the main condenser (3) and
- the argon removal column (5) is arranged over the auxiliary column (4).

2. System according to Claim 1, **characterized by** means for recovering a first gaseous overhead fraction (26b) from the auxiliary column (4) as first gaseous nitrogen product.

3. System according to Claim 1 or 2, **characterized by** means for recovering a second gaseous overhead fraction (26a) from the low-pressure column (2) as a second gaseous nitrogen product.

4. System according to Claims 2 and 3, **characterized by** means (26b; 27, 28) for separately passing the first and second overhead fractions through a main heat exchanger (103) for warming these fractions against feed air (102, 108, 112) for the high-pressure column (1).

5. System according to any one of Claims 1 to 4, **characterized by** means for introducing gas (23b) from the evaporation space of the argon removal column top condenser (6) into the auxiliary column (4) .

6. System according to any one of Claims 1 to 5, **characterized in that** the means for introducing a gaseous fraction, the oxygen content of which is equal to that of air or higher, into the auxiliary column are constructed as means for introducing turbine-expanded air (12) into the auxiliary column (4) .

7. Method for generation of oxygen by low-temperature air separation in a distillation column system that comprises
- a high-pressure column (1) and a low-pressure column (2),
- a main condenser (3) which is constructed as a condenser-evaporator, wherein the liquefaction space of the main condenser (3) is flow-connected (13, 14, 15) to the top of the high-pressure column (2) and the evaporation space of the main condenser (3) is flow-connected (31, 33, 34, 35) to the low-pressure column (2) and
- an auxiliary column (4),
wherein
- an oxygen stream (37) is taken off from the low-pressure column (2) and is recovered as oxygen product,
- a gaseous fraction (12), the oxygen content of which is equal to that of air or higher, is introduced into the sump region of the auxiliary column (4),
- a liquid stream (19, 20, 20b) from the high-pressure column (1), the main condenser (3) or the low-pressure column (2) is applied as reflux to the top of the auxiliary column (4), wherein the liquid stream has a nitrogen content that is at least equal to that of air,
- an argon-rich stream (29) is introduced from an intermediate site of the low-pressure column (2) into an argon removal column (5),
- reflux (39) for the argon removal column (5) is generated in an argon removal column top condenser (6) that is constructed as a condenser-evaporator, wherein the liquefaction space of the top condenser (6) of the argon removal column is flow-connected to the top of the argon removal column (5),
- crude oxygen (21, 22) is introduced from the sump of the high-pressure column (1) into the evaporation space of the argon removal column top condenser (6), wherein
- the main condenser (3) is arranged over the high-pressure column (1) and
- the argon removal column top condenser (6) is arranged over the argon removal column (5),
chacterized in that
- the low-pressure column (2) is arranged beside the high-pressure column (1),
- the auxiliary column (4) is arranged over the main condenser (3) and
- the argon removal column (5) is arranged over the auxiliary column (4).

8. Method according to Claim 7, in which a first gaseous overhead fraction (26b) is recovered from the auxiliary column (4) as first gaseous nitrogen product.

9. Method according to Claim 7 or 8, in which a second gaseous overhead fraction (26a) is recovered from the low-pressure column (2) as second gaseous nitrogen product.

10. Method according to Claim 8 and 9, in which the first and second overhead fractions (26b; 27, 28) are passed separately through a main heat exchanger (103) for warming these fractions against feed air (102, 108, 112) for the high-pressure column (1).

11. Method according to any one of Claims 7 to 10, in which gas (23b) from the evaporation space of the argon removal column top condenser (6) is introduced into the auxiliary column (4).

12. Method according to any one of Claims 1 to 5, **characterized in that** the gaseous fraction, the oxygen content of which is equal to that of air or higher, is formed by turbine-expanded air (12).

## Revendications

1. Installation de production d'oxygène par séparation cryogénique de l'air, comprenant
- une colonne haute pression (1) et une colonne basse pression (2),
- un condenseur principal (3) qui est réalisé sous forme de condenseur-évaporateur, l'espace de liquéfaction du condenseur principal (3) étant en liaison fluidique (13, 14, 15) avec la tête de la colonne haute pression (2) et l'espace d'évaporation du condenseur principal (3) étant en liaison fluidique (31, 33, 34, 35) avec la colonne basse pression (2),
- une conduite de produit d'oxygène (37) qui est raccordée à la colonne basse pression (2),
- une colonne auxiliaire (4),
- des moyens pour introduire une fraction gazeuse (12), dont la teneur en oxygène est égale à celle de l'air ou supérieure à celle-ci, dans la région de collecteur de la colonne auxiliaire (4) et
- une conduite de liquide de retour (19, 20, 20b) pour introduire un courant de fluide depuis la colonne haute pression (1), le condenseur principal (3) ou la colonne basse pression (2) en tant que retour vers la tête de la colonne auxiliaire (4), le courant de fluide présentant une teneur en azote qui est au moins égale à celle de l'air,
- une colonne d'évacuation d'argon (5) qui est en liaison fluidique (29, 30) avec un emplacement intermédiaire de la colonne basse pression (2),
- un condenseur de tête de la colonne d'évacuation d'argon (6), qui est réalisé sous forme de condenseur-évaporateur, l'espace de liquéfaction du condenseur de tête de la colonne d'évacuation d'argon (6) étant en liaison fluidique (38, 39) avec la tête de la colonne d'évacuation d'argon (5),
- une conduite d'oxygène brut (21, 22) pour introduire de l'oxygène brut fluide hors du collecteur de la colonne haute pression (1) dans l'espace d'évaporation du condenseur de tête de la colonne d'évacuation d'argon (6),
- le condenseur principal (3) étant disposé par-dessus la colonne haute pression (1) et le condenseur de tête de la colonne d'évacuation d'argon (6) étant disposé par-dessus la colonne d'évacuation d'argon (5),
**caractérisée en ce que**
- la colonne basse pression (2) est disposée à côté de la colonne haute pression (1),
- la colonne auxiliaire (4) est disposée au-dessus du condenseur principal (3) et
- la colonne d'évacuation d'argon (5) est disposée au-dessus de la colonne auxiliaire (4) .

2. Installation selon la revendication 1, **caractérisée par** des moyens pour obtenir une première fraction de tête gazeuse (26b) à partir de la colonne auxiliaire (4) en tant que premier produit d'azote gazeux.

3. Installation selon la revendication 1 ou 2, **caractérisée par** des moyens pour obtenir une deuxième fraction de tête gazeuse (26a) à partir de la colonne basse pression (2) en tant que deuxième produit d'azote gazeux.

4. Installation selon les revendications 2 et 3, **caractérisée par** des moyens (26b ; 27, 28) pour guider séparément la première et la deuxième fraction de tête à travers un échangeur de chaleur principal (103) pour chauffer ces fractions contre l'air de charge (102, 108, 112) pour la colonne de pression (1).

5. Installation selon l'une quelconque des revendications 1 à 4, **caractérisée par** des moyens pour introduire du gaz (23b) depuis l'espace d'évaporation du condenseur de tête de la colonne d'évacuation d'argon (6) dans la colonne auxiliaire (4).

6. Installation selon l'une quelconque des revendications 1 à 5, **caractérisée en ce que** les moyens pour introduire une fraction gazeuse dont la teneur en oxygène est égale à celle de l'air ou est supérieure à celle-ci, sont réalisés dans la colonne auxiliaire en tant que moyens pour introduire de l'air (12) détendu par une turbine dans la colonne auxiliaire (4).

7. Procédé pour produire de l'oxygène par séparation cryogénique d'air dans un système de colonne de distillation qui présente
- une colonne haute pression (1) et une colonne basse pression (2),
- un condenseur principal (3) qui est réalisé sous forme de condenseur-évaporateur, l'espace de liquéfaction du condenseur principal (3) étant en liaison fluidique (13, 14, 15) avec la tête de la colonne haute pression (2) et l'espace d'évaporation du condenseur principal (3) étant en liaison fluidique (31, 33, 34, 35) avec la colonne basse pression (2) et
- une colonne auxiliaire (4),
- un courant d'oxygène (37) étant prélevé de la colonne basse pression (2) et étant obtenu sous forme de produit d'oxygène,
- une fraction gazeuse (12), dont la teneur en oxygène est égale à celle de l'air ou est supérieure à celle-ci, étant introduite dans la région de collecteur de la colonne auxiliaire (4),
- un courant de fluide (19, 20, 20b) provenant de la colonne haute pression (1), du condenseur principal (3) ou de la colonne basse pression (2) étant ajouté en tant que retour à la tête de la colonne auxiliaire (4), le courant de fluide présentant une teneur en azote qui est au moins égale à celle de l'air,
- un courant riche en argon (29) étant introduit depuis un emplacement intermédiaire de la colonne basse pression (2) dans une colonne d'évacuation d'argon (5),
- un retour (39) pour la colonne d'évacuation d'argon (5) dans un condenseur de tête de la colonne d'évacuation d'argon (6) étant créé, lequel est réalisé sous forme de condenseur-évaporateur, l'espace de liquéfaction du condenseur de tête (6) de la colonne d'évacuation d'argon étant en liaison fluidique (38) avec la tête de la colonne d'évacuation d'argon (5),
- l'oxygène brut (21, 22) provenant du collecteur de la colonne haute pression (1) étant introduit dans l'espace d'évaporation du condenseur de tête de la colonne d'évacuation d'argon (6),
- le condenseur principal (3) étant disposé au-dessus de la colonne haute pression (1) et
- le condenseur de tête de la colonne d'évacuation d'argon (6) étant disposé au-dessus de la colonne d'évacuation d'argon (5),
**caractérisé en ce que**
- la colonne basse pression (2) est disposée à côté de la colonne haute pression (1),
- la colonne auxiliaire (4) est disposée au-dessus du condenseur principal (3) et
- la colonne d'évacuation d'argon (5) est disposée au-dessus de la colonne auxiliaire (4) .

8. Procédé selon la revendication 7, dans lequel une première fraction de tête gazeuse (26b) est obtenue à partir de la colonne auxiliaire (4) en tant que premier produit d'azote gazeux.

9. Procédé selon la revendication 7 ou 8, dans lequel une deuxième fraction de tête gazeuse (26a) est obtenue à partir de la colonne basse pression (2) en tant que deuxième produit d'azote gazeux.

10. Procédé selon les revendications 8 et 9, dans lequel la première et la deuxième fraction de tête (26b ; 27, 28) sont conduites séparément à travers un échangeur de chaleur principal (103) pour chauffer ces fractions contre l'air de charge (102, 108, 112) pour la colonne haute pression (1) .

11. Procédé selon l'une quelconque des revendications 7 à 10, dans lequel du gaz (23b) provenant de l'espace d'évaporation du condensateur de tête de la colonne d'évacuation d'argon (6) est introduit dans la colonne auxiliaire (4).

12. Procédé selon l'une quelconque des revendications 1 à 5, **caractérisé en ce que** la fraction gazeuse dont la teneur en oxygène est égale à celle de l'air ou est supérieure à celle-ci, est formée par de l'air (12) détendu par la turbine.
